(19) Europäisches Patentamt
European Patent Office
Office européen des brevets

(11) **EP 4 622 067 A1**

(12) **EUROPEAN PATENT APPLICATION**
published in accordance with Art. 153(4) EPC

(43) Date of publication:
**24.09.2025 Bulletin 2025/39**

(21) Application number: **23891149.9**

(22) Date of filing: **13.09.2023**

(51) International Patent Classification (IPC):
**H02K 1/278** (2022.01)

(52) Cooperative Patent Classification (CPC):
**H02K 1/278**

(86) International application number:
**PCT/JP2023/033298**

(87) International publication number:
**WO 2024/105990 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.11.2022 JP 2022181977**

(71) Applicant: Sinfonia Technology Co., Ltd.
**Tokyo 105-8564 (JP)**

(72) Inventors:
• **SAKAMOTO, Taichi**
**Tokyo 105-8564 (JP)**
• **ARUGA, Nobuo**
**Tokyo 105-8564 (JP)**
• **WATANABE, Shunya**
**Tokyo 105-8564 (JP)**
• **ITO, Akihiro**
**Tokyo 105-8564 (JP)**

(74) Representative: **TBK**
**Bavariaring 4-6**
**80336 München (DE)**

(54) **ELECTRIC MACHINE**

(57) [Problem] To realize a motor having a structure for preventing a magnet and a magnet holding portion from being damaged even if the magnet holding portion is thermally contracted.

[Solution] In a device including a rotor core 21, a plurality of magnets 22 disposed on a surface of the rotor core 21 along a thrust generation direction (S direction), and a magnet holding portion 23 disposed between the magnets 22 and 22, in which the magnet holding portion 23 is structured by including: a protruding portion 23a extending from the rotor core 21 in a radial direction (T direction), which is the direction orthogonal to the thrust generation direction (S direction), passing between the magnet 22 and the magnet 22; and a claw portion 23b extending from a distal end of the protruding portion 23a to positions overlapping the magnets 22, a compression layer 24 whose modulus of elasticity is lower than that of the magnet 22 is provided at a position to be compressed when the magnet holding portion 23 is thermally contracted.

FIG.1

(a)

(b)

## Description

### TECHNICAL FIELD

The present invention relates to an electric machine having a structure in which a magnet is disposed on a surface of a core as in a surface permanent magnet (SPM) motor, for example.

### BACKGROUND ART

Conventionally, an SPM motor has been known as an electric machine having a magnet disposed on a surface (for example, Patent Document 1).

The SPM motor is constituted of a rotor including a magnet, and a stator. The rotor is configured by mounting a rotor core on a shaft, and disposing the magnet on a surface of the rotor core. The stator is arranged on an outer circumference of the rotor and is provided with teeth extending toward the rotor, and a coil wound around the teeth.

This SPM motor includes a magnet holding portion which is referred to as an inset type for holding the magnet on the surface. The magnet holding portion is structured by including: a protruding portion which protrudes from the rotor core in a direction of an outside diameter between the magnets; and a claw portion extending from a distal end of the protruding portion in a direction of overlapping the magnets, and by the magnet holding portion, the magnet is restricted from moving in a circumferential direction and a radial direction when being rotated.

### PRIOR ART DOCUMENT

### PATENT DOCUMENT

Patent Document 1: Japanese Unexamined Patent Application Publication No. 2020-78177

### SUMMARY OF THE INVENTION

### [Technical Problem]

Incidentally, when this motor is used in a low-temperature environment, because of a difference in linear expansion coefficient between the magnet holding portion and the magnet, the magnet holding portion compresses the magnet in the radial direction due to a difference in the thermal contraction. Consequently, thermal stress is produced in the magnet and the magnet holding portion, and it is feared that one of the magnet and the magnet holding portion, or both of the magnet and the magnet holding portion may be damaged. The lower the environmental temperature is, the greater the thermal stress becomes, and the larger the magnet is, the greater the thermal stress becomes.

Such a problem is found not only in the SPM motor, but also in a linear motor or the like if it has a structure in which a magnet is held by a magnet holding portion.

Hence, the present invention has been conceived by paying attention to such a problem, and an object of the present invention is to realize an electric machine having a new structure capable of preventing a magnet and a magnet holding portion from being damaged even if the magnet holding portion is thermally contracted.

### SOLUTION TO PROBLEM

The present invention adopts the following means to achieve such an object.

That is, an electric machine of the present invention is provided with a core, a plurality of magnets disposed on a surface of the core along a thrust generation direction, and a magnet holding portion disposed between the magnets, in which the magnet holding portion is structured by including: a protruding portion extending from the core in a direction orthogonal to the thrust generation direction passing between the magnet and the magnet; and a claw portion extending from a distal end of the protruding portion to positions overlapping the magnets, and is characterized in that a compression layer whose modulus of elasticity is lower than that of the magnet is provided at a position to be compressed when the magnet holding portion is thermally contracted.

In such a structure, when the magnet holding portion is thermally contracted, the compression layer is compressively deformed, and so the stress produced in the magnet holding portion is reduced. Therefore, it is possible to effectively prevent the magnet and the magnet holding portion from being damaged by thermal stress.

In this case, it is preferable that the magnet should be divided in the direction orthogonal to the thrust generation direction, and the compression layer should be provided between the divided magnets.

According to such a configuration, when the magnet holding portion is thermally contracted in the direction orthogonal to the thrust generation direction, the compression layer that is provided between a division gap is compressively deformed, and so the stress produced in the magnet holding portion is reduced. Moreover, as the magnet is divided, although a cross section through which a magnetic flux that induces eddy currents passes does not change, a cross-sectional area surrounded by the eddy currents that flow through the magnet is reduced. Thus, if the compression layer is made of an insulating material, it is also possible to reduce an eddy-current loss. If the number of divisions is increased, the thickness of each of the compression layers can further be reduced, and not only is the strength stabilized but also, an advantage of being able to reduce the eddy-current loss is enhanced.

Alternatively, it is also preferable that the compression layer should be provided between the magnet and the surface of the core, or between the magnet and the claw portion of the magnet holding portion.

Even in a case where the compression layer is provided at this position, when the magnet holding portion is thermally contracted in the direction orthogonal to the thrust generation direction, the compression layer is compressively deformed, and so the stress produced in the magnet and the magnet holding portion can be reduced.

It is also preferable that the compression layer should be provided between the magnet and the protruding portion of the magnet holding portion.

When the compression layer is provided at this position, as a stress in the thrust generation direction acts on the compression layer, the compression layer is compressively deformed. Consequently, insertion of the magnet is facilitated. Also, ease of filling resin and the filling rate are improved regardless of whether the resin is in the form of liquid, a sheet, or solid, at the time when the magnet is inserted, and it further becomes possible to moderate the stress caused by a thermal deformation difference between the magnet and the core at a low temperature.

Further, it is preferable that a deformation allowing portion, which allows such a deformation that the compression layer is elongated in a direction crossing a compression direction by being compressed, should be provided at a position facing the compression layer.

Assuming that the volume of the compression layer does not substantially change, an appropriate compressive deformation of the compression layer can be induced by providing the deformation allowing portion.

It is preferable that the thickness of the compression layer of the above case should be set in a range in which the expected amount of compression does not exceed the compressive strength.

An adhesive or the like which simply bonds the magnet to the core may break by being compressed, so that the function thereof as an elastic body is impaired. However, by designing the compression layer to withstand a compressive strength, the compression layer can be made to effectively function as the compression layer of the present invention.

ADVANTAGEOUS EFFECT OF THE INVENTION

According to the electric machine of the present invention described above, even if the magnet holding portion is thermally contracted, the compression layer is compressively deformed, and so the stress produced in the magnet holding portion can be reduced. Therefore, it is possible to effectively prevent the magnet and the magnet holding portion from being damaged by the thermal stress.

BRIEF DESCRIPTION OF THE DRAWINGS

    FIG. 1 is a schematic sectional view of a motor as an electric machine according to an embodiment of the present invention;
    FIG. 2 is a view illustrating an inset structure of FIG. 1 that has been developed together with a comparative example;
    FIG. 3 is an explanatory diagram of a compression layer in the embodiment;
    FIG. 4 is a diagram illustrating Modification 1 of the present invention;
    FIG. 5 is a diagram illustrating Modification 2 of the present invention;
    FIG. 6 is a diagram illustrating Modification 3 of the present invention;
    FIG. 7 is a diagram illustrating Modification 4 of the present invention;
    FIG. 8 is a diagram illustrating Modification 5 of the present invention; and
    FIG. 9 is a diagram illustrating Modification 6 of the present invention.

DESCRIPTION OF THE EMBODIMENT

An embodiment of the present invention will be described below with reference to the drawings.

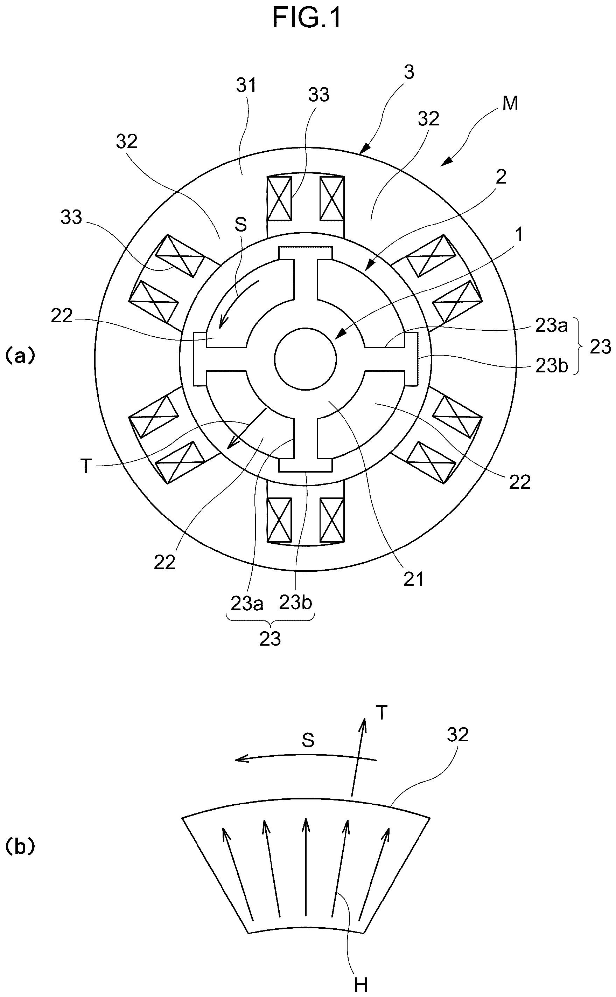

FIG. 1 is a schematic cross-sectional view showing an example in which an electric machine of the present invention is applied to a motor M, which is a rotary electric motor.

As illustrated in FIG. 1 (a), the motor M is of an inner rotor type, and is structured by mounting a rotor (rotational element) 2, which serves as a movable element, on a shaft 1 to be rotatable integrally with the shaft 1, and arranging a stator (fixed element) 3 on an outer circumference of the rotor 2.

The stator 3 is provided with: a stator core 31, which is a core structured in a substantially cylindrical shape; a plurality of teeth 32 that are formed integrally with the stator core 31 toward an inner circumference from equal angular positions of the stator core 31; and coils 33 that are wound around the respective teeth 32. A power supply device (not illustrated) is connected to the coils 33, and it is structured such that a rotating magnetic field to rotate the rotational element 2 is generated by the power being fed.

The rotor 2 is disposed on the inner circumference side of the fixed element 3 with a predetermined gap therebetween. The rotor 2 is provided with: a rotor core 21, which is a core structured in a substantially cylindrical shape; and magnets (permanent magnets) 22 which are disposed on an outer circumferential surface of the rotor core 21 along the rotor core 21.

The magnets 22 are fan-shaped magnets that are arranged at a plurality of places according to the number of poles in a thrust generation direction (S direction), that is, a circumferential direction of the rotor core 21, and are structured in a substantially annular shape as a whole. As indicated by arrow H in FIG. 1 (b), each of the magnets 22 is disposed such that an orientation direction (direction of easy magnetization) is directed in a radial direction (T direction), which is the direction orthogonal to the thrust generation direction (S direction). As the material of the magnets 22, for example, rare-earth magnets such as a neodymium magnet or a samarium-cobalt magnet are adopted.

Further, the magnets 22 are held to the rotor core 21 by a magnet holding portion 23 which is referred to as an inset type. The magnet holding portion 23 is structured in a T-shape including: a protruding portion 23a extending from the rotor core 21 in the radial direction (T direction), which is the direction orthogonal to the thrust generation direction (S direction), between the magnet 22 and the magnet 22; and a claw portion 23b extending from a distal end of the protruding portion 23a to positions overlapping outer peripheral surfaces of the magnets 22 positioned on both sides that are toward an advancing side and a lagging side of a rotational direction. By the presence of the magnet holding portion 23, movement of the magnet 22 in a circumferential direction (S direction) when being rotated is restricted by the protruding portion 23a, and movement of the magnet 22 in the radial direction (T direction) is restricted by the claw portion 23b. As the material of the magnet holding portion 23, an electromagnetic steel plate, which is the same material as that of the rotor core 21, for example, is used.

The magnet holding portion 23 in FIG. 1 is merely a schematic diagram. Therefore, it is possible to adopt a form in which the claw portion 23b is embedded in a concave portion provided on the outer peripheral surface of the magnet 22 so that the outer periphery of the claw portion 23b aligns with the outer peripheral surface of the magnet 22.

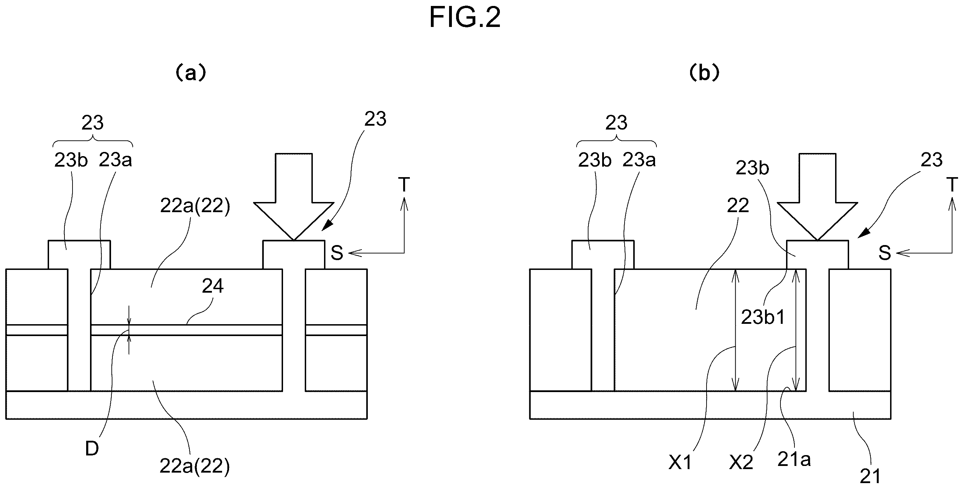

FIG. 2 (a) shows an inset structure in FIG. 1 (a) developed linearly. The magnet 22 is actually divided into magnet pieces 22a and 22a, and a compression layer 24 is provided between the magnet pieces 22a and 22a.

FIG. 2 (b) shows a conventional inset structure as a comparative example. **In** this conventional structure, a single block-like magnet 22 is disposed between magnet holding portions 23 and 23 that are arranged in the circumferential direction (S direction). The magnet holding portion 23 also includes a projected portion 23a and a claw portion 23b. There is no gap or only a very small gap between the magnet 22 and the magnet holding portion 23 in the circumferential direction (S direction) and the radial direction (T direction) in order to restrict the movement of the magnet 22.

For this reason, when the motor M is used in a low-temperature environment, the magnet holding portion 23 is thermally contracted and compresses the magnet 22 in the radial direction, as indicated by an outline arrow in the drawing. Consequently, thermal stress is produced in the magnet 22 and the magnet holding portion 23, and it is feared that one of the magnet 22 and the magnet holding portion 23, or both of the magnet 22 and the magnet holding portion 23 may be damaged.

For example, when the magnet 22 is formed of a neodymium magnet, a linear expansion coefficient of the magnet 22 is $7 \times 10^{-6}$ [1/°C] in a direction parallel to the orientation direction (i.e., direction of easy magnetization), and substantially 0 [1/°C] in a direction orthogonal to the orientation direction (i.e., direction perpendicular to magnetization). It is calculated that, from the above value of the linear expansion coefficient, contraction occurs by approximately 0.1% when the temperature drops by 140°C, for example. Meanwhile, when the magnet holding portion 23 is configured from an electromagnetic steel plate, an expansion coefficient is $12 \times 10^{-6}$ [1/°C], which is greater than that of the magnet.

A contraction amount (expansion amount) $\Delta X$ is expressed as follows, where X represents the length in a direction of linear expansion, $\alpha$ represents the linear expansion coefficient, and $\Delta T$ represents a temperature difference:

$$\Delta X = X \times \alpha \times \Delta T \cdots (1)$$

**In** the present embodiment, when it is assumed that the orientation direction of the magnet 22 corresponds to the radial direction (T direction), and the length (thickness) of the magnet 22 in the radial direction is represented as X1, in the opposed magnet holding portion 23, the length of the magnet holding portion 23 that substantially holds the magnet 22 is represented as a distance X2 which is from a base end position of the protruding portion 23a, in other words, an outer peripheral surface 21a of a yoke 21, to a lower surface 23b1 of the claw portion 23b. Here, if the magnet 22 is held without a gap, it is assumed that X1 =X2 (=X). Therefore, in the mathematical expression (1), if the temperature differences $\Delta T$ of the magnet 22 and the magnet holding portion 23 are also the same under the same environment, a linear expansion difference $\Delta X$ between the magnet 22 and the magnet holding portion 23 is determined by a linear expansion coefficient difference $\Delta\alpha$.

Therefore, as the contraction of the magnet holding portion 23 whose linear expansion coefficient is larger than that of the magnet 22 becomes dominant, the distance X2 between the claw portion 23b and the rotor core surface 21a becomes smaller than the thickness X1 of the magnet 22. As a result, contraction toward the magnet 22 is caused as indicated by the outline arrow in the drawing.

Therefore, in the present embodiment, as described above, in the inset structure illustrated in FIG. 1 (a), the magnet 22 is configured by dividing the magnet 22 into a plurality of magnet pieces 22a, as illustrated in FIG. 2 (a). Further, the compression layer 24 whose modulus of elasticity is lower than that of the magnet 22 is provided between the magnet pieces 22a and 22a that are adjacent to each other in the radial direction (T direction), and the compression layer 24 is made to deform by the compressive stress when the magnet holding portion 23 is thermally contracted. Although each of the magnet pieces is denoted by the same reference numeral 22a, the magnet pieces need not necessarily have the same thickness (the same applies hereinafter).

The compression layer 24 is made of an elastic material, and is disposed over substantially the entire area between the magnet piece 22a on the inner circumference side and the magnet piece 22a on the outer side in uniform thickness and with practically no gap in the circumferential direction and the radial direction between the magnet holding portions 23 and 23. Also in a direction perpendicular to the plane of FIGS. 1 (a) and 2 (a) (i.e., an axial direction of the shaft 1), the same is disposed over substantially the entire area between the magnet piece 22a on the inner circumference side and the magnet piece 22a on the outer side in uniform thickness and with practically no gap in the axial direction between the magnet holding portions 23 and 23.

Examples of the material of the compression layer 24 include epoxy-based materials, acrylic-based materials, silicone-based materials, and urethane-based materials. As the method of manufacturing, a material is poured between the magnet pieces 22a and 22a and solidified, or the compression layer 24 molded in a sheet shape is sandwiched between the magnet pieces 22a and 22a and assembled.

The thickness of the compression layer 24 of the above case is set in a range in which the expected amount of compression does not exceed the compressive strength. Further, the thickness of the compression layer 24 may be determined also in consideration of the strength of the magnet 22 and the rotor core 21.

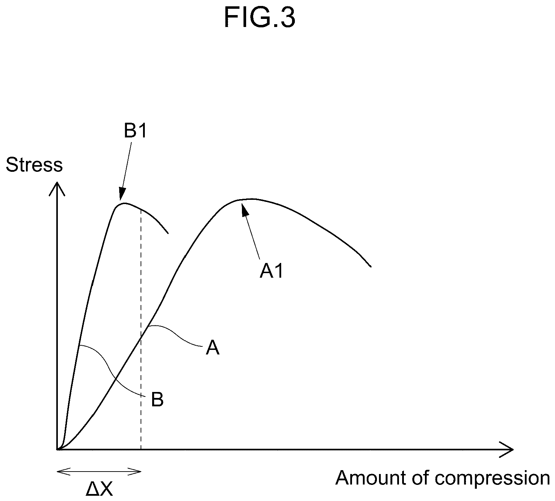

If the compression layer 24 has compression characteristics as indicated by line A (yield point A1) of FIG. 3, the compression amount $\Delta X$ is below the yield point A1, but if the compression layer 24 has compression characteristics as indicated by line B (yield point B1) of FIG. 3, the compression amount $\Delta X$ exceeds the yield point B1. Thus, the compression layer 24 loses the function as an elastic body due to the compression. For example, given that the length of the magnet holding portion 23 of the rotor 2 illustrated in FIG. 1 is 10 mm, when the ambient temperature drops by 200°C from 20°C to -180°C, the amount of compression by the magnet holding portion 23 is 10 mm $\times$ 200°C $\times$ ($12 \times 10^{-6}$ - $7 \times 10^{-6}$) $\approx$ 0.01 mm. At this time, if a normal adhesion layer (0.1 mm thick) is to receive the above contraction, the adhesion layer is compressed by approximately 10%, and the function of the adhesive layer as an elastic body may be broken down as this case corresponds to line B of FIG. 3.

In contrast, in the present embodiment, thickness D and the material of the compression layer 24 illustrated in FIG. 2 (a) are set such that the contraction amount $\Delta X$ does not exceed the yield point A1 as indicated by line A of FIG. 3 even when thermal contraction occurs by a temperature difference that is expected. For example, the compression layer 24 is set to have a thickness of approximately 0.2 mm, which is twice as thick as the normal adhesive layer (0.1 mm), and is set to have a compression ratio of 5% or less even when the compression layer 24 is subjected to a temperature change of 200 °C. By doing so, the function as an elastic body is secured while preventing the compression layer 24 from being broken.

Although the above is a simple example, the compressive stress actually produced in the compression layer 24 is determined by the thickness of the magnet 22 (the length of the magnet holding portion 23), an angle of a magnetization direction, a linear expansion coefficient of the magnet 22, an environmental temperature, the thickness of the compression layer 24, the Young's modulus of the compression layer 24, and the like. Therefore, the compression layer 24 must be one that does not break by this compressive stress. An example of the thickness of the compression layer 24 per layer is 0.01 mm to 1.0 mm, preferably, 0.03 mm to 0.8 mm, and more preferably, 0.05 mm to 0.5 mm, and the total number of compression layers 24 is increased as necessary.

As described above, the motor M, which is an electric machine of the present embodiment, is provided with the rotor core 21, a plurality of magnets 22 disposed on a surface of the rotor core 21 along the thrust generation direction (S direction), and the magnet holding portion 23 disposed between the magnets 22 and 22, and the magnet holding portion 23 is formed of a structure including: the protruding portion 23a extending from the rotor core 21 in the radial direction (T direction), which is the direction orthogonal to the thrust generation direction (S direction), passing between the magnet 22 and the magnet 22; and the claw portion 23b extending from the distal end of the protruding portion 23a to positions overlapping the magnets 22.

Further, the compression layer 24 whose modulus of elasticity is lower than that of the magnet 22 is provided at a position to be compressed when the magnet holding portion 23 is thermally contracted.

In such a structure, when the magnet holding portion 23 is thermally contracted, the compression layer 24 is compressively deformed, and so the stress produced in the magnet 22 and the magnet holding portion 23 is reduced. Therefore, it is possible to effectively prevent the magnet 22 (the magnet pieces 22a) and the magnet holding portion 23 from being damaged by thermal stress.

In particular, in the present embodiment, the magnet 22 is divided in a direction (T direction) orthogonal to the thrust generation direction (S direction), and the compression layer 24 is provided between the divided magnet pieces 22a and 22a.

According to such a configuration, when the magnet holding portion 23 is thermally contracted in the radial direction (T direction) orthogonal to the thrust generation direction (S direction), the compression layer 24 that is provided between the magnet pieces 22a and 22a is compressively deformed, and so the stress produced in the magnet 22 and the magnet holding portion 23 is reduced. Moreover, as the magnet 22 is divided into the magnet pieces 22a and 22a, although a cross section through which a magnetic flux that induces eddy currents passes does not change, a cross-sectional area surrounded by the eddy currents that flow through the magnet is reduced due to the magnet being divided. Thus, if the compression layer is made of an insulating material, it is also possible to reduce an eddy-current loss, and further achieve improvement in motor efficiency.

As described above, since the motor M of the present embodiment can effectively reduce stress produced in the magnet 22 and the magnet holding portion 23, an SPM motor of an inset type can be realized even in a low-temperature environment such as a high-altitude environment, a space environment, or a cooling environment employing liquid nitrogen. Further, by this feature, it becomes possible to effectively make the motor M downsized, reduced in weight, and high in performance.

Although an embodiment of the present invention has been described above, the specific configurations of the components are not limited to only those of the above-described embodiment. **In** the following, some modifications will be described. However, the same reference numerals are assigned to parts that are common to the above embodiment, and the common parts are not described except for those parts that need to be described particularly.

(Modification 1)

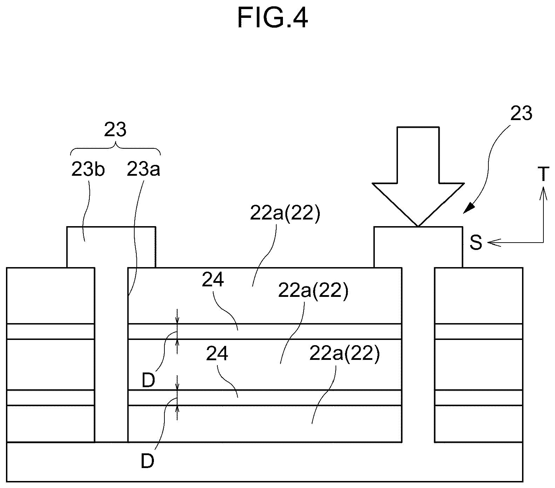

For example, as illustrated in FIG. 4, the number of divisions of the magnet 22 may be greater than or equal to two in the radial direction (T direction). By increasing the number of divisions, not only the sum total of the thermal stresses but also the eddy-current loss in each of the magnet pieces 22a can be reduced. Thus, advantages of being able to reduce generation of heat due to the loss and achieving high-efficiency of the motor M can be obtained.

**In** this case, since the compression layers 24 are arranged in series, when it is required that the thickness of the compression layers 24 should be 0. 2 mm, for example, it is sufficient if the sum total of the thicknesses D of the respective compression layers 24 satisfies this value. The thickness D of each of the compression layers 24 need not have the same value.

(Modification 2)

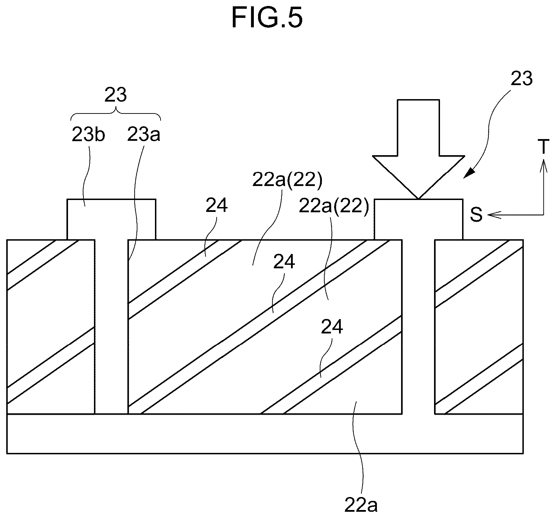

**In** addition, it suffices that a division surface is not parallel to a direction of thermal contraction of the magnet holding portion 23. Thus, the compression layer 24 may be structured to be inclined, as illustrated in FIG. 5. Even in a case where the compression layer 24 is formed between the magnet pieces 22a and 22a in such a structure, when the magnet holding portion 23 is thermally contracted in the radial direction (T direction) orthogonal to the thrust generation direction (S direction), a radial direction (T direction) component of the compression layer 24 is compressively deformed, and so the stress produced in the magnet 22 and the magnet holding portion 24 can be reduced.

Such an oblique compression layer 24 is also effective when applied to a rotary machine having a magnet array of a magnetic flux concentration type such as a Halbach array.

(Modification 3)

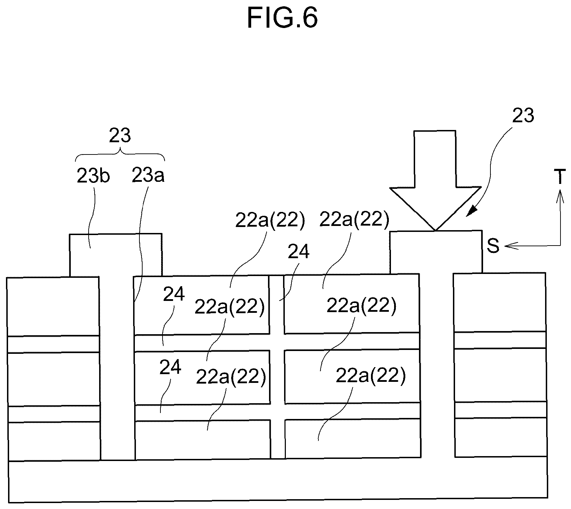

Further, as illustrated in FIG. 6, the magnet 22 may be divided in the circumferential direction (S direction) and the radial direction (T direction), and the compression layer 24 may be formed between the magnet pieces 22a and 22a in the radial direction (T direction), and between the magnet pieces 22a and 22a in the circumferential direction (S direction). By doing so, not only is it possible to reduce the thermal stress applied in the radial direction (T direction) of the compression layer 24, but it is also possible to further reduce the eddy-current loss of the magnet 22 as compared to Modification 1.

(Modification 4)

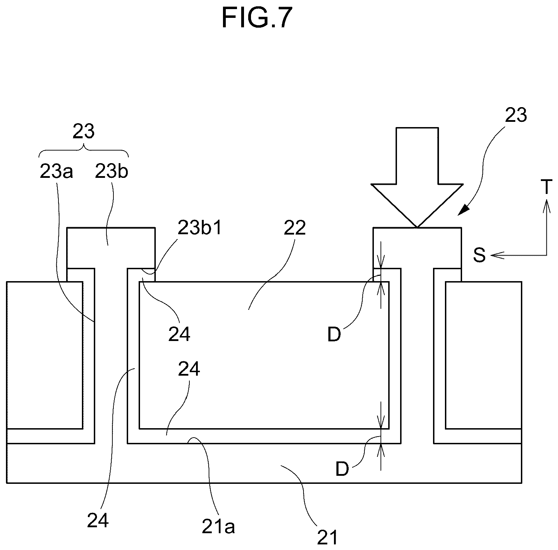

Further, as illustrated in FIG. 7, such a configuration that the magnet 22 is not divided, and the compression layer 24 having the thickness D is provided between the magnet 22 and the surface 21a of the rotor core 21, or between the magnet 22 and the lower surface 23b1 of the claw portion 23b of the magnet holding portion 23, may alternatively be adopted. Even in a case where the compression layer 24 is provided at this position, when the magnet holding portion 23 is thermally contracted in the direction (T direction) orthogonal to the thrust generation direction (S direction), the compression layer 24 is compressively deformed, and so the stress produced in the magnet 22 and the magnet holding portion 23 can be reduced. In this case, since a gap between the magnet 22 and the magnet holding portion 23 can be increased, an advantage of being able to easily insert the magnet 22 onto the rotor core 21 can be obtained. Also in this case, the value of the thickness D of each of the compression layers 24 need not be the same.

In this example, the compression layer 24 is also provided in a gap between the protruding portion 23a of the magnet holding portion 23 and the magnet 22 in the circumferential direction (S direction). By such a configuration, ease of filling resin and the filling rate are improved regardless of whether the resin is in the form of liquid, a sheet, or solid, at the time when the magnet is inserted, and it further becomes possible to moderate the stress caused by a thermal deformation difference between the magnet and the core at a low temperature.

(Modification 5)

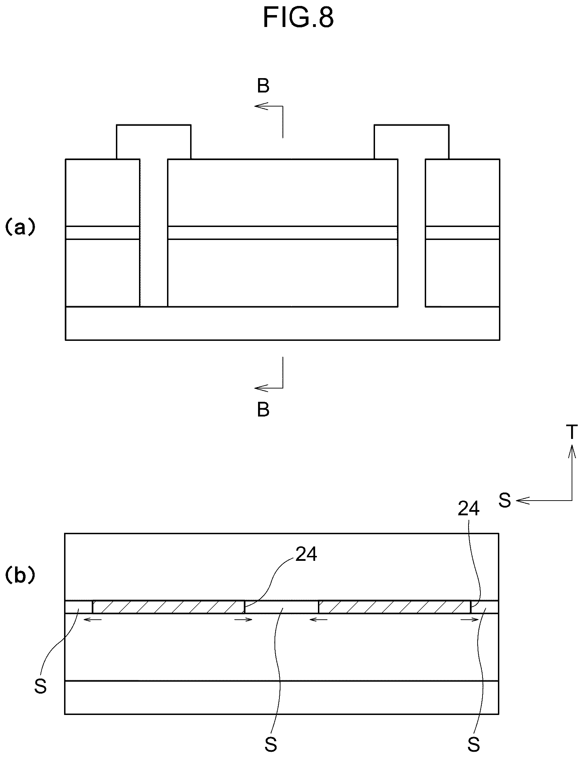

Further, as illustrated in FIG. 8 (b) corresponding to a cross section taken along line B-B of FIG. 8 (a), it is desirable that a deformation allowing portion S, which allows such a deformation that the compression layer 24 is elongated in a direction (S direction) of crossing the compression direction (T direction) as the compression layer 24 is compressed, be provided at a position facing the compression layer 24.

Assuming that the volume of the compression layer 24 does not substantially change, other portions need to expand in order to allow the compression layer 24 to be compressed. Thus, by providing the deformation allowing portion S, an appropriate compressive deformation of the compression layer 24 can be induced.

(Modification 6)

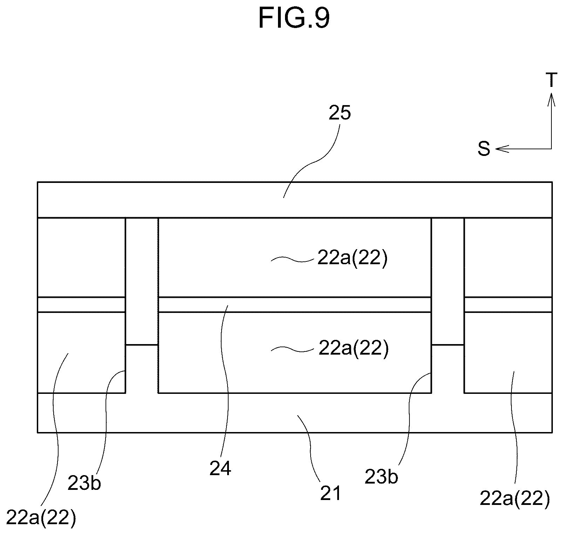

Alternatively, as illustrated in FIG. 9, the magnets 22 with the compression layer 24 interposed therebetween may be held by a shrink ring 25 instead of by the inset type.

In this case, although a protruding portion 23b projects upward from the rotor core 21 in the direction (T direction) orthogonal to the thrust generation direction (S direction) passing between a magnet 22a and a magnet 22a, a distal end of the protruding portion 23b does not extend to a position to press the surface of the magnet 22. Therefore, by pressing the outer periphery of the magnet 22 with the shrink ring 25, movement of the magnet 22 in the radial direction is restricted.

When the compression layer 24 is provided in such a structure, an advantage of being able to suppress an eccentricity that is caused by a positional deviation of the magnet 22 can also be obtained by press-fitting the shrink ring 25. Further, since the compression layer 24 can reduce the stress to the shrink ring 25 and the magnet 22 which is caused when the shrink ring 25 is press-fitted, damage to the shrink ring 25 and the magnet 22 can be prevented. Further, as the stress reduction enables a press-fitting allowance to be increased, it is possible to eliminate a gap between the shrink ring 25 and the magnet 22 produced during high-speed rotation by large pre-tension (force of contracting in the radial direction) exerted on the shrink ring 25, so that high-speed rotation can be achieved.

(Modification 7)

In the above, a case where an electric machine is a rotary electric motor (a motor) has been described. However, when S in FIGS. 2 to 9 is assumed as a straight traveling direction corresponding to the thrust generation direction, and T is assumed as a direction orthogonal thereto, the electric machine can also be realized as a linear-motion machine such as a linear motor.

Other configurations can also be modified variously within the scope not departing from the gist of the present invention.

INDUSTRIAL APPLICABILITY

The present invention can be applied to an electric machine having a structure in which a magnet is disposed on a surface of a core as in a surface permanent magnet (SPM) motor, for example.

[Reference Signs List]

> M Electric machine (motor)
> 21 Core (rotor core)
> 22 Magnet
> 23 Magnet holding portion
> 23a Protruding portion
> 23b Claw portion
> 24 Compression layer

**Claims**

1. An electric machine comprising a core, a plurality of magnets disposed on a surface of the core along a thrust generation direction, and a magnet holding portion disposed between the magnets, in which the magnet holding portion is structured by including: a protruding portion extending from the core in a direction orthogonal to the thrust generation direction by passing between the magnet and the magnet; and a claw portion extending from a distal end of the protruding portion to positions overlapping the magnets, wherein a compression layer whose modulus of elasticity is lower than that of the magnet is provided at a position to be compressed when the magnet holding portion is thermally contracted.

2. The electric machine according to claim 1, wherein the magnet is divided in the direction orthogonal to the thrust generation direction, and the compression layer is provided between the divided magnets.

3. The electric machine according to claim 1, wherein the compression layer is provided between the magnet and the surface of the core, or between the magnet and the claw portion of the magnet holding portion.

**4.** The electric machine according to claim 1, wherein the compression layer is provided between the magnet and the protruding portion of the magnet holding portion.

**5.** The electric machine according to claim 1, wherein a deformation allowing portion, which allows such a deformation that the compression layer is elongated in a direction crossing a compression direction by being compressed, is provided at a position facing the compression layer.

**6.** The electric machine according to any one of claims 1 to 5, wherein a thickness of the compression layer is set in a range in which an expected amount of compression does not exceed compressive strength.

# FIG.1

(a)

(b)

FIG.2

（a）

（b）

EP 4 622 067 A1

# FIG.3

# FIG.4

# FIG.5

# FIG.6

# FIG.7

# FIG.8

(a)

(b)

# FIG.9

T

S

25

22a(22)

22a(22)

23b

24

21

23b

22a(22)

22a(22)

## INTERNATIONAL SEARCH REPORT

| International application No. |
|---|
| **PCT/JP2023/033298** |

### A. CLASSIFICATION OF SUBJECT MATTER

*H02K 1/278*(2022.01)i
FI: H02K1/278

According to International Patent Classification (IPC) or to both national classification and IPC

### B. FIELDS SEARCHED

Minimum documentation searched (classification system followed by classification symbols)

H02K1/278

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-92984 A (MITSUBISHI HEAVY INDUSTRIES AUTOMOTIVE THERMAL SYSTEMS CO., LTD.) 23 May 2016 (2016-05-23) paragraphs [0018]-[0024], [0056]-[0058], fig. 1, 20-21 | 1-6 |
| X | US 2018/0048199 A1 (CANRIG DRILLING TECHNOLOGIY LTD.) 15 February 2018 (2018-02-15) paragraphs [0016]-[0025], fig. 1-2 | 1, 3-6 |
| A | | 2 |
| X | CN 210167871 U (CONTINENTAL AUTOMOTIVE WUHU CO., LTD.) 20 March 2020 (2020-03-20) paragraphs [0031]-[0032], fig. 1-1A | 1, 3, 5-6 |
| A | | 2, 4 |

☐ Further documents are listed in the continuation of Box C.   ☑ See patent family annex.

| * Special categories of cited documents: | | |
|---|---|---|
| "A" document defining the general state of the art which is not considered to be of particular relevance | "T" | later document published after the international filing date or priority date and not in conflict with the application but cited to understand the principle or theory underlying the invention |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **04 October 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/033298**

| Patent document cited in search report | | | Publication date (day/month/year) | Patent family member(s) | | | Publication date (day/month/year) |
|---|---|---|---|---|---|---|---|
| JP | 2016-92984 | A | 23 May 2016 | US | 2017/0317544 | A1 | |
| | | | | paragraphs [0047]-[0055], [0102]-[0108], fig. 1, 20-21 | | | |
| | | | | WO | 2016/072379 | A1 | |
| | | | | CN | 107112829 | A | |
| US | 2018/0048199 | A1 | 15 February 2018 | WO | 2015/117075 | A1 | |
| | | | | CA | 2936022 | A1 | |
| | | | | CN | 106233581 | A | |
| CN | 210167871 | U | 20 March 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020078177 A